# EUROPÄISCHE PATENTANMELDUNG

(11) **EP 1 614 376 A1**
(43) Veröffentlichungstag der Anmeldung: **11.01.2006**
(21) Anmeldenummer: 05013062.4
(22) Anmeldetag: 17.06.2005
(51) Int. Cl.: A47J 37/06

(54) **Gesundheitsgrill-Element mit Fettauffangsystem**

(30) Priorität: 19.06.2004 DE 202004009520 U
(71) Anmelder: Franke Klaus, 14776 Brandenburg (DE)
(72) Erfinder: Franke Klaus, 14776 Brandenburg (DE)

(57) **Zusammenfassung**

Gesundheitsgrill-Element mit Fettauffangsystem,
ist ein Grillzusatzgerät das auf herkömmliche Grillgeräte aufgesetzt wird. Über die darunter liegende Wärmequelle wird zwischen den Grillelementen (1) das Grillgut (zum Beispiel Fleisch) unbelastet von verbrannten Fetten (Gase) gegrillt, in dem die abtropfenden Grillsäfte und besonders die Fette aus dem Grillgut (5) mit dem Grillelement (1) aufgefangen werden und zum Nebengefäss (15) weiter fliesen wo diese gesammelt werden.
Mit dieser Technik wird erreich, dass das Grillgut (auch stark fetthaltiges Fleisch) direkt über der Wärmequelle (zum Beispiel Holzkohlenglut) gegrillt werden kann, ohne dass Krebserregende- Stoffe entstehen.
Die Grillelemente (1) sind verstellbar Gelagert und können auch direkt im Grillgerät eingebaut werden.
Die aufwendige Reinigung, die sonst beim Grillgerät üblich ist entfällt, da die Grillelemente (1) aus Dünnblech bzw. Folge hergestellt sind, diese werden nach dem Grillvorgang erneuert.

## Beschreibung

Gesundheitsgrill mit Pettauffang-und Ablaufsystem dies ist so gestaltet, dass beim Grillvorgang bzw. beim Erhitzen des Grillgutes, das heraustropfende Fett aufgefangen und in einem Nebengefäss (15) gesammelt wird dadurch wird verhindert, dass diese Fette in die Wärmequelle (16) gelangen, und giftige Dämpfe erzeugen.

Mit der Ausführung DE 202 17 867.6 wird diese Funktion nicht voll erfüllt, indem die Ablaufrinnen durch herabfallende Kleinteile leicht verstopf wird.

Ein weiteres Problem ist die Reinigung der Grillelemente nach dem Grillvorgang, in dem die Fette in die Grillelemente eingebrannt sind.

Mit der Erfindung wird erreicht, das Lebensmittel jeder Art über eine Wärmequelle weitgehend gesünder gegrillt werden, indem das Grillelement (1) in der neuen Form, besonders mit der Teilabdeckung (12) an der Rinne (11) und der Abtropfform (9) an der unteren Seite der Verstärkung (6) eine volle Grillfunktion gewährleistet ohne dass die Grillsäfte in die Wärmequelle (16) gelangen.

Eine weitere Ausgestaltung der Erfindung ist,die Reinigung der stork verschmutzten Grillelemente, (durch einbrennen der Grillsäfte) dies wird dadurch gelöst, in dem diese Grillelemente aus Dünnblech bzw. Folie hergestellt sind.

Diese Grillelemente werden nach ei- oder mehrmaligen Gebrauch, durch neue ersetzt. Die gebrauchten Grillelemente werden recycelt.

Die neue Grillelemente (1) eind im Grundgerät (4) mit den Zapfen (2u.3) oder mit einer Achse gelagert. Mit dem im Gehäuse (4) befindlichen Schiebestück (13) mit Griff (17) das in die Grillelemente (1) eingreift, ist jeder Stellwinkel der Grillelemente (1) möglich.

Die Grillelemente (1) Bind nebeneinander angebracht und im Profil (14) so gestaltet, dass die erhitzten Drillfette und Säfte vom Grillgut (5) voll aufgefangen werden.

An der Verstärkung (6) tropft ein Teil der Grillaäfte am Punkt (9) ab und fällt mit den zwischen den Grillelementen abtropfenden Säften (18) auf die Seite(7), wo diese von der Rinne (11) aufgenommen werden und weiter in das Auffanggefäss (15) fliesen. Mit der Teilabdeckung (12) wird die Rinne (11) von den herunterfallenden Kleinteilen freigehalten.

Durch das schräge Profil (L-K) an der die Rinne (11) am unteren Bereich angebracht 1st, entsteht ein Gefälle in der Rinne, dieses Gefälle wird noch verstärkt, in dem das Profil (14) zusätzlich diagonal nach unten geformt ist.

Fig. 1

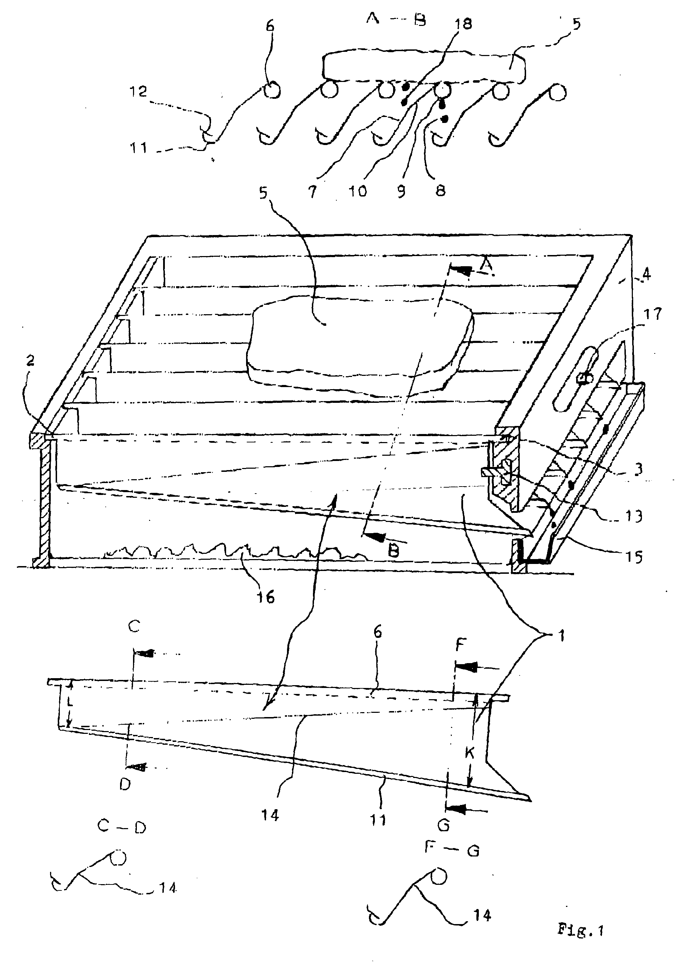

## Patentansprüche

1. Gesundheitsgrill mit Fettauffangsyetem, zum Grillen von Lebensmittel, **dadurch gekennzeichnet, dass** Grillelemente(1) vorwiegend aus Dünnblech bzw.und/oder Folie oder einem artverwanten Maierial in der Särke von 0,05 bis 0,45mm vorwiegend 0,15 bis 0,20mm geformt bzw. gefertigt sind.

2. Gesundheitsgrill mit Fettauffangsystem nach Anspruch 1, **dadurch gekennzeichnet, dass** die Grillelemente (1) in ein Gehäuse bzw. Rahmen nebeneinander, mit Zapfen oder/und mit Achse/n bzw. Welle/n gelegert sind.

3. Gesundheitsgrill mit Fettauffangsystem,nach Anspruch 1, und 2, **dadurch gekennzeichnet, dass** die Grillelemente (1) mit dem im/am Gehäuse angebrachten Schiebestück/e (13) in die Grillelemente (1) eingreift bzw. verbunder, ist und diene damit verstellbar sind.

4. Gesundheitsgrill mit Fettauffangsystem nach Anspruch 1,2 und 3 **dadurch gekennzeichnet, dass** am Grillelement (1) im oberen Bereich eine überwiegende einseitige, nach unten gerichtete, vorzugsweise runde Verstärkung (6) mit Abstropftiefpunkt/e (9) geformt bzw. angebracht ist.

5. Gesundheitsgrill mit Feltouffangsystem nach Anspruch 1 bis 4 **dadurch gekennzeichnet dass** am Grillelement (1) im unteren Bereich, mindestens eine Rinne (11) geformt oder/ und angebracht ist.

6. Gesundheitsgrill mit Fettauffangsystem nach Anspruch 1 bis 5 **dadurch gekennzeichnet, dass** über die Rinne/n (11) oder in dessen Nähe mindestens eine Teilebdeckung (12) geformt oder/und angebracht ist.
